(19) Europäisches Patentamt
European Patent Office
Office européen des brevets

(11) Veröffentlichungsnummer : **0 162 241**
**B1**

(12) # EUROPÄISCHE PATENTSCHRIFT

(45) Veröffentlichungstag der Patentschrift : **30.09.87**

(51) Int. Cl.[4] : **C 08 L 67/00**

(21) Anmeldenummer : **85103842.2**

(22) Anmeldetag : **29.03.85**

(54) **Wärmehärtbares Cyanatharz und seine Verwendung zur Herstellung von Verbundwerkstoffen und IPN's.**

(30) Priorität : **11.04.84 DE 3413547**

(43) Veröffentlichungstag der Anmeldung : **27.11.85 Patentblatt 85/48**

(45) Bekanntmachung des Hinweises auf die Patenterteilung : **30.09.87 Patentblatt 87/40**

(84) Benannte Vertragsstaaten : **DE FR GB IT**

(56) Entgegenhaltungen :
**DE-B- 1 220 133**
**CHEMICAL ABSTRACTS, Band 101, Nr. 8, 20. August 1984, Seite 25, Nr. 55881x, Columbus, Ohio, US; D.H. WERTZ u.a.: "SIPNs: a new class of high-performance plastics"**
**CHEMICAL ABSTRACTS, Band 92, Nr. 22, 2. Juni 1980, Seite 30, Nr. 182066f, Columbus, Ohio, US**
**PATENTS ABSTRACTS OF JAPAN, Band 4, Nr. 174 (C-33)[656], 2. Dezember 1980**

(73) Patentinhaber : **BAYER AG**
**Konzernverwaltung RP Patentabteilung**
**D-5090 Leverkusen 1 Bayerwerk (DE)**

(72) Erfinder : **Blahak, Johannes, Dr.**
**Bodelschwinghstrasse 25**
**D-4150 Krefeld (DE)**
Erfinder : **Dhein, Rolf, Dr.**
**Deswatinesstrasse 30**
**D-4150 Krefeld 1 (DE)**
Erfinder : **Preis, Lothar, Dr.**
**August-Kierspel-Strasse 42**
**D-5060 Bergisch Gladbach 2 (DE)**
Erfinder : **Schreckenberg, Manfred, Dr.**
**Bärenstrasse 14**
**D-4150 Krefeld 1 (DE)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein wärmehärtbares Harz aus entweder a) mindestens einem Polycyanat und b) mindestens einem Polyesterpolyol oder c) einem Vorpolymerisat aus a) und b) und die Verwendung dieses Harzes zur Herstellung von Verbundwerkstoffen bzw. seine Verwendung bei der Herstellung von interpenetrating polymer networks (IPN's).

Hochleistungsverbundwerkstoffe auf Basis faserverstärkter Duromerer gewinnen immer größere Bedeutung. Die Bruchdehnung moderner Verstärkungsfasern, z. B. Kohlenstoffasern, beträgt bis zu 2 %, und es ist zu erwarten, daß Verstärkungsfasern mit noch höherer Bruchdehnung in naher Zukunft zur Verfügung stehen werden. Damit diese Bruchdehnung im Verbundwerkstoff voll genutzt werden kann, ist es notwendig, die Bruchdehnung der aus dem Duromeren bestehenden Matrix so weit anzuheben — und zwar ohne wesentliche Beeinträchtigung der Wärmeformbeständigkeit — daß sie die Bruchdehnung der Verstärkungsfasern erreicht oder übertrifft, d. h. Matrices mit Bruchdehnungen von mindestens 2 %, vorzugsweise mindestens 4 %, insbesondere mindestens 6 % zur Verfügung zu stellen.

Aufgabe der Erfindung war also das Bereitstellen von temperaturstabilen Duromeren hoher Bruchdehnung.

Überraschenderweise wurde gefunden, daß diese Aufgabe durch den Zusatz cycloaliphatische Reste enthaltender niedermolekularer Polyester zu einem Polycyanat und anschließende gemeinsame Aushärtung gelöst werden kann.

Gegenstand der Erfindung ist also ein wärmehärtbares Harz enthaltend

a) mindestens ein Polycyanat und

b) 1 bis 40, vorzugsweise 5 bis 20, Gew.-%, bezogen auf (a), mindestens eines Polyesters mit einer OH-Zahl von 28 bis 320, vorzugsweise von 28 bis 140, mg KOH/g Substanz, einem als Zahlenmittel $\bar{M}_n$ bestimmten Molekulargewicht von 700 bis 8 000, vorzugsweise von 800 bis 4 000 und/oder

c) ein Vorpolymerisat aus (a) und (b),

dadurch gekennzeichnet, daß der Polyester (b) 50 bis 92, vorzugsweise 75 bis 89, Gew.-% cycloaliphatische Strukturen enthaltender Alkohol- und/oder Säurereste enthält.

Bevorzugte Polycyanate (a) entsprechen der Formel

$$R(O{-}C{\equiv}N)_n \qquad (1)$$

worin n eine ganze Zahl gleich oder größer 2, vorzugsweise 2, ist und R einen n-wertigen aromatischen, gegebenenfalls durch Brückenglieder verbundenen, Rest bedeutet. Die aromatischen Reste R enthalten mindestens 6 C-Atome, vorzugsweise 6 bis 12 C-Atome. Besonders bevorzugte Reste R sind z. B. Phenylen, Naphthylen, Anthrylen und Diphenylen.

Der durch Brückenglieder unterbrochene aromatische Rest R besitzt mindestens 12 C-Atome, vorzugsweise 12 bis 36 C-Atome. Er ist aus aromatischen Resten mit wenigstens 6 C-Atomen, vorzugsweise 6 C-Atomen, aufgebaut. Die Brückenglieder können Atome oder Atomgruppen sein, wie z. B.

(2)

-O- -S- (3)

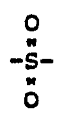

(4)

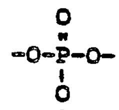

(5)

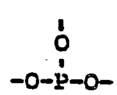

(6)

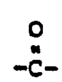

(7)

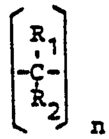 (8)

worin $R_1$ und $R_2$ gleich oder verschieden sein können und Wasserstoff oder niedrige Alkylreste mit 1 bis 4 C-Atomen und n eine ganze Zahl zwischen 1 und 6 bedeutet ; ein gegebenenfalls durch niedrige Alkylgruppen mit 1 bis 4 C-Atomen substituierter Rest des Cyclopentans oder Cyclohexans,

$-CH_2-O-CH_2-$ , (9)

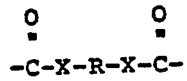 , (10)

worin X = 0, NH, NR' (R' = niedriger Alkylrest mit 1 bis 4 C-Atomen) bedeuten können, ferner R einen Kohlenwasserstoffrest und speziell im Fall von X = 0 einen Rest eines Oligo- oder Polyglykols, eines Polyethers, Polyesters oder Polyurethans, und im Falle von X = NH oder NR' einen Rest eines Polyamins, Polyamids oder Polyharnstoffs ; das Brückenglied

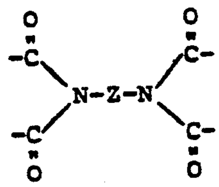 (11)

worin Z beispielsweise

$(-CH_2-)_{2-6}$; (12)

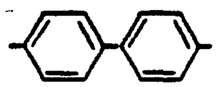 (13)

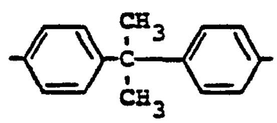 (14)

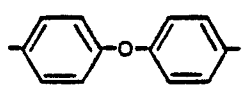 (15)

bedeutet ; ferner kann das Brückenglied auch Reste, wie z. B.

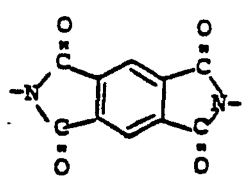 (16)

oder

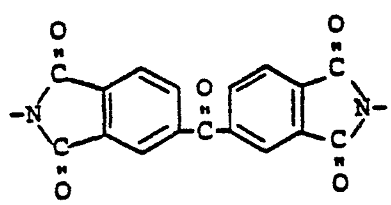 (17)

darstellen.

Die aromatischen Reste können zusätzlich Substituenten tragen wie Alkyle mit 1 bis 6 C-Atomen, Cycloalkyle mit 5 bis 7 C-Atomen, Aralkyle wie Benzyl, oder Phenylethyl, Aryle wie Phenyl oder Naphthyl, Alkoxygruppen mit 1 bis 6 C-Atomen im Alkylrest, Halogen wie Chlor, Brom oder Fluor, Nitrogruppen, Carbonsäureester-, Carbonsäureamid-, Carbonsäurenitril- oder Sulfonsäureestergruppen. Vorzugsweise werden aromatische Cyansäureester verwendet, die nicht substituierte aromatische Kerne enthalten.

Es ist ohne weiteres möglich, auch Mischungen der Cyansäureester zu verwenden.

Speziell seien folgende aromatische Cyansäureester genannt : m- oder p-Phenylenbiscyanat, 1,3,5-Tricyanatobenzol, 1,3-, 1,4-, 1,5-, 1,6-, 1,7-, 1,8-, 2,6-, 2,7-Dicyanatonaphthalin, 1,3,6-Tricyanatonaphthalin, 4,4'-Dicyanatodiphenyl, 2,2'-Dicyanatodinaphthyl-(1,1'), 1-Methyl-1,4-dicyanatobenzol, 2-Chlor-1,4-dicyanatobenzol, 2,3-Dicyano-1,4-dicyanatobenzol, 4-Chlor-1,3-di-cyanatobenzol, 4-Acetyl-1,3-dicyanatobenzol, 2-Nitro-1,3-dicyanatobenzol, 3,5,3',5'-Tetrachlor-2,2'-dicyanato-diphenyl, ferner Bis- oder Polycyanatochinone, wie 1,4-Dicyanatonaphthochinon, 1,4- oder 1,5-Dicyanatoanthrachinon, aber auch Bis- oder Polycyanatoverbindungen, deren die Cyanatgruppe tragende aromatischen Reste durch Brückenglieder verbunden sind, wie 2,2'- oder 3,3'- oder 4,4'-Dicyanatodiphenylmethan ; 4,4'-Dicyanatodiphenylethan-(1,1) bzw. -(1,2) ; 2,2-Bis-(4-cyanatophenyl)-propan ; 2,4-Bis-(4-cyanatophenyl)-2-methylpentan ; 1,1-Bis-(4-cyanatophenyl)-cyclohexan ; 4,4',4''-Tricyanatotriphenylmethan ; 4,4'-Dicyanatodiphenylether ; 4,4'-Dicyanatodiphenylsulfid ; 4,4'-Dicyanato-diphenylsulfon, 4,4'-Dicyanato-dibenzylether ; 4,4'-Dicyanato-dibenzylether ; 4,4'-Dicyanato-dibenzyl-thio-ether ; 2,2'-Dicyanato-3,5,3',5'-tetramethyldibenzylether ; 4,4'-Dicyanato-benzophenon, 2,2-Bis-(4-cyanato-3,5-dichlorphenyl)-propan ; Tri-(4-cyanatophenyl)-phosphat.

Weiterhin sind solche Polycyansäureester geeignet, die aus chemisch nicht eindeutig definierten Kondensationsprodukten von Phenolen und Aldehyden, insbesondere Formaldehyd, beispielsweise Novolaken oder Phenol-modifizierten Xylol-Formaldehydharzen, durch Reaktion mit Halogencyan in Gegenwart einer Base zugänglich sind (vgl. DE-PS 1 251 023). Ferner seien auch solche Bis-(oder Poly-) cyansäureester, die von den Bis-(oder Poly-) phenolen der nachstehenden Formel abgeleitet sind und aus diesen mit Halogencyan und Base erhalten werden können, genannt :

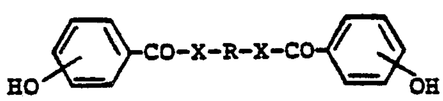

(18)

X bedeutet dabei O oder NH oder NR'. R bedeutet einen Kohlenwasserstoffrest und im Falle von X = 0 einen Rest eines Oligo- oder Polyglykols, eines Polyethers, Polyesters oder Polyurethans, im Falle von X = NH oder NR' einen Rest eines Polyamins, Polyamids oder Polyharnstoffs. R' soll für einen niederen Alkylrest stehen.

Ferner seien genannt :

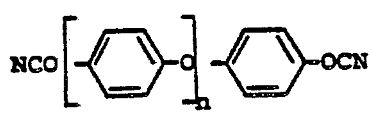

(19)

n = 2 bis 6

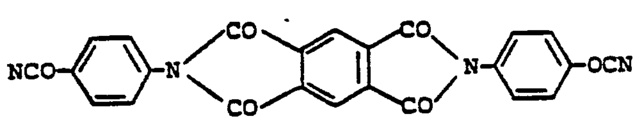

(20)

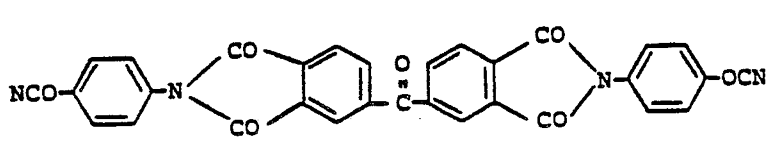

(21)

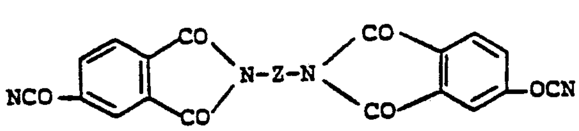

(22)

wobei Z beispielsweise $(CH_2)_{2-6}$

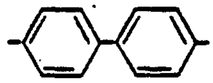 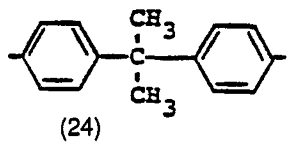 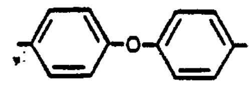

(23) (24) (25)

bedeutet.

Besonders interessant für die Herstellung hydrophober Matrices ist die Verwendung von fluorierten Cyanaten, z. B. solchen der Formel

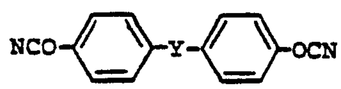 (26)

worin Y perfluoriertes $C_1$-$C_{10}$-Alkylen, vorzugsweise $—CF_2—$, $—CF_2—CF_2—$ und

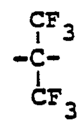

bedeutet.

Besonders bevorzugt als Polycyanat ist das 2,2-Bis-(4-cyanatophenyl)-propan.

Bevorzugte Polyester (b) sind z. B. Polykondensate auf Basis von Polyolen und gegebenenfalls Monoalkoholen, von Polycarbonsäuren und gegebenenfalls Monocarbonsäuren, und/oder von Hydroxycarbonsäuren. Sie tragen als Endgruppen vorzugsweise Hydroxyl- und/oder Carboxylgruppen, mitunter auch Cyanat-, Isocyanat-, Acryloyl- oder Methacryloylgruppen.

Zur Herstellung der Polyester (b) einzusetzende Polycarbonsäuren sind insbesondere solche der allgemeinen Formel

$$A(—COOH)_x \qquad (27)$$

wobei A eine Bindung (bei x = 2) oder einen x-wertigen, gegebenenfalls substituierten aliphatischen Rest mit vorzugsweise 1-20 C-Atomen, einen cycloaliphatischen Rest mit vorzugsweise 5-16 C-Atomen, einen aliphatisch-aromatischen Rest mit vorzugsweise 7-20 C-Atomen, einen aromatischen Rest mit vorzugsweise 6-15 C-Atomen, oder einen Heteroatome, wie N, O oder S, im Ring enthaltenden aromatischen oder cycloaliphatischen Rest mit 2-12 C-Atomen und x eine ganze Zahl von 2 bis 4, vorzugsweise 2 und 3, bedeuten.

Bevorzugte derartige Polycarbonsäuren sind beispielsweise :

Oxalsäure, Malonsäure, Bernsteinsäure, Glutarsäure, Adipin-, Trimethyladipin-, Azelain-, Sebacinsäure, Decandicarbonsäure, Dodecandicarbonsäure, Fumarsäure, Maleinsäure, Hexahydroterephthalsäure, Phthalsäure, Isophthalsäure, Terephthalsäure, Benzol-1,3,5-tricarbonsäure, Benzol-1,2,4-tricarbonsäure, Benzol-1,2,3-tricarbonsäure, Naphthalin-1,5-dicarbonsäure, Benzophenon-4,4'-dicarbonsäure, Diphenylsulfon-4,4'-dicarbonsäure, Butantetracarbonsäure, Tricarballylsäure, Ethylentetracarbonsäure, Pyromellithsäure, Benzol-1,2,3,4-tetracarbonsäure, Benzol-1,2,3,5-tetracarbonsäure sowie

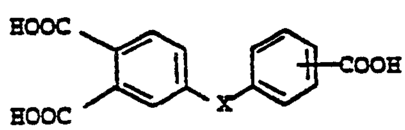 bzw. 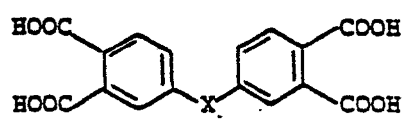

mit x = 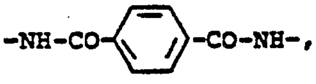 , 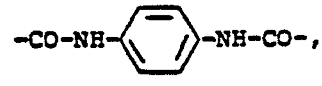 ,

$-O-$, $-S-$, $-SO_2-$, $-CO-$, $-N{=}N-$, $-CH_2-$, $-CH_3-\overset{|}{\underset{|}{C}}-CH_3$

Als Hydroxycarbonsäuren sind solche der Formel

$$(HOOC—)_y\ A(—OH)_z \qquad (28)$$

bevorzugt, in der A die oben angeführten Bedeutungen hat und y sowie z unabhängig voneinander eine ganze Zahl von 1 bis 3, vorzugsweise 1 oder 2, sein können.

Bevorzugte Beispiele sind Glykolsäure, Milchsäure, Mandelsäure, Äpfelsäure, Zitronensäure, Weinsäure, 2-, 3- und 4-Hydroxybenzoesäure sowie Hydroxybenzoldicarbonsäuren.

Zur Herstellung der Polyesterpolycarbonsäuren einzusetzende Polyole sind insbesondere solche der Formel

$$B(—OH)_a \qquad (29)$$

wobei B einen a-wertigen aliphatischen Rest mit 2 bis 20 C-Atomen, einen cycloaliphatischen Rest mit 5 bis 16 C-Atomen, einen araliphatischen Rest mit 7 bis 20 C-Atomen, einen aromatischen Rest mit 6 bis 15 C-Atomen und einen N, O oder S enthaltenden heterocyclischen Rest mit 2 bis 12 C-Atomen und a eine ganze Zahl von 2 bis 6, vorzugsweise 2 oder 3, bedeuten.

Als bevorzugte derartige Polyole seien aufgeführt : Ethylenglykol, 1,2- und 1,3-Propandiol, 1,2-, 1,3-, 1,4- und 2,3-Butandiol, 1,5-Pentandiol, 2,2-Dimethyl-1,3-propandiol, 1,6- und 2,5-Hexandiol, 1,12-Dodecandiol, 1,12- und 1,18-Octadecandiol, 2,2,4- und 2,4,4-Trimethyl-1,6-hexandiol, Trimethylolpropan, Trimethylolethan, Glycerin, 1,2,6-Hexantriol, Pentaerythrit, Mannit, 1,4-Bis-hydroxymethyl-cyclohexan, Cyclohexan-1,4-diol, 2,2-Bis-(4-hydroxycyclohexyl)-propan, Bis-(4-hydroxyphenyl)-methan, Bis-(4-hydroxyphenyl)-sulfon, 1,4-Bis-(hydroxymethyl)-benzol, 1,4-Dihydroxybenzol, 2,2-Bis-(4-hydroxyphenyl)-propan, 1,4-Bis-(β-hydroxyethoxy)-benzol, 1,3-Bis-hydroxyalkylhydantoine, Trishydroxyalkylisocyanurate und Trishydroxyalkyltriazolidin-3,5-dione.

Weitere zur Herstellung der Polyesterpolycarbonsäuren geeignete Polyole sind die durch Addition von gegebenenfalls substituierten Alkylenoxiden wie Ethylenoxid, Propylenoxid, Butylenoxid, Styroloxid an die oben erwähnten Polyole entstandenen Hydroxyalkylether der Formel

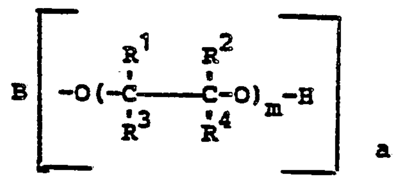

(30)

worin

B und a die oben angegebene Bedeutung haben,

m für eine ganze Zahl von 1 bis 7 und

$R^1$, $R^2$, $R^3$ und $R^4$ unabhängig voneinander für Wasserstoffatome, gegebenenfalls mit Halogen substituierte aliphatische $C_1$-$C_{10}$-Reste, cycloaliphatische $C_4$-$C_8$-Reste, araliphatische $C_7$-$C_{17}$-Reste oder gegebenenfalls mit Halogen, Alkyl und/oder Alkoxy substituierte aromatische $C_6$-$C_{16}$-Reste stehen. Vorzugsweise bedeuten $R^1$, $R^2$, $R^3$ und $R^4$ Wasserstoff, Alkylreste mit 1 bis 4 C-Atomen, vorzugsweise Methyl, Ethyl oder gegebenenfalls mit Halogenatomen (Chlor, Brom), $C_1$-$C_4$-Alkylresten und/oder mit $C_1$-$C_4$-Alkoxygruppen substituierte $C_6$-$C_{12}$-Arylreste, insbesondere aber Phenyl.

Bevorzugte derartige Polyole sind beispielsweise : Diethylenglykol, Triethylenglykol, Dipropylenglykol, Tripropylenglykol, Dibutylenglykol, 1,4-Bis-(2-hydroxy-ethoxy)-cyclohexan, 1,4-Bis-(2-hydroxy-ethoxymethyl)-cyclohexan, 1,4-Bis-(2-hydroxy-ethoxy)-benzol, 4,4'-Bis-(2-hydroxyethoxy)-diphenylmethan, -2-diphenyl-propan, -diphenylether, -diphenylsulfon, -diphenylketon und -diphenylcyclohexan.

Selbstverständlich können die einzusetzenden Carbonsäuren bzw. Carbonsäurederivate und die zu verwendenden Polyole auch oligomerer Natur sein. So können hier beispielsweise aromatische Dicarbonsäureester der Strukturformel

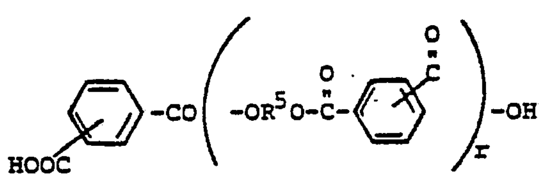

(31)

und aliphatische Dicarbonsäureester der Strukturformel

$$HOOC(-CH_2)_s—CO[OR^6—OOC(-CH_2)_t—CO]_r\ OH \qquad (32)$$

eingesetzt werden, worin

$R^5$ und $R^6$ einen mindestens zweiwertigen aromatischen Rest mit 6 bis 15 C-Atomen, einen araliphatischen Rest mit 7 bis 20 C-Atomen, einen gesättigten oder ungesättigten aliphatischen Rest mit 2 bis 20 C-Atomen, einen cycloaliphatischen Rest mit 5 bis 15 C-Atomen, der jeweils mit aromatischen ($C_6$-$C_{12}$), cycloaliphatischen ($C_4$-$C_{12}$) oder heterocyclischen ($C_2$-$C_{12}$) Ringsystemen kondensiert sein sowie Ether-, Keto-, Ester- oder Sulfobrücken enthalten kann und gegebenenfalls durch Halogen, Nitro- oder Alkoxygruppen mit 1 bis 20 C-Atomen substituiert ist,

r eine ganze Zahl von 1 bis 20,
s und t unabhängig voneinander Null oder eine ganze Zahl von 1 bis 20 bedeuten.
Bevorzugte Beispiele für $(R^5)_r$ bzw. $(R^6)_r$ sind :

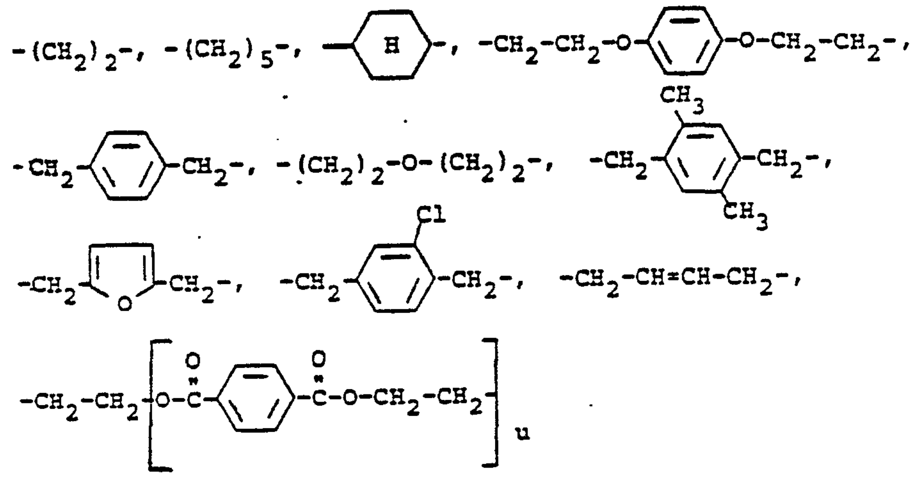

worin u eine ganze Zahl von 1 bis 7 bedeutet.

Unter den Resten cycloaliphatische Strukturen enthaltender Alkohole und Säuren werden die jeweils um die Wasserstoffatome der alkoholischen Gruppe bzw. um die Hydroxylreste der Carboxylgruppen verminderten Alkohole und Säuren verstanden. Besonders bevorzugte Alkohol- und Säurereste mit cycloaliphatischen Strukturen sind der Rest der Dimerfettsäure, idealisiert

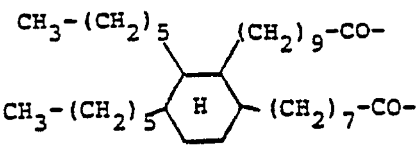

(33)

und der Rest des Dimerfettalkohols, idealisiert

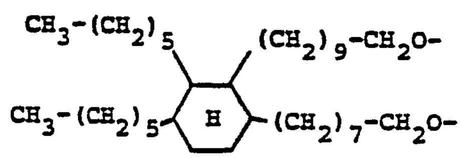

(34)

Das bevorzugteste Polyol zur Herstellung der Polyester (b) ist Hexandiol-1,6.

Bevorzugte Polyester (b) sind z. B. in der DE-OS 29 42 680 und in der US-PS 35 49 570 beschrieben.

Das als Zahlenmittel bestimmte Molekulargewicht der Polyester (b) beträgt 700-8 000 (bis zu Molekulargewichten von 5 000 dampfdruckosmometrisch bestimmt in Dioxan und Aceton, wobei bei differierenden Werten der niedrigere Wert als korrekt angesehen wird ; bei Molekulargewichten über 5 000 membranosmometrisch bestimmt in Aceton).

Bevorzugte Vorpolymerisate c) aus (a) und (b) besitzen Viskositäten, die erlauben, die Produkte noch zu gießen, gegebenenfalls nach dem Erwärmen, d. h. Viskositäten bis z. B. 10 000 mPa · s bei 150 °C.

Will man besonders hochtemperaturbeständige Formteile herstellen, so kann man neben den Komponenten a) und b) bzw. c) zusätzlich Verbindungen einsetzen, die — für sich allein polymerisiert — zu hochtemperaturbeständigen Polymerisaten (mit Erweichungspunkten von mindestens 200 °C, durch DTA gemessen) führen, z. B. Bisimide aus Maleinsäureanhydrid und Diaminoarylen (z. B. 4,4'-Diaminodiphenylmethan). Die Mengen dieser olefinisch ungesättigten, polymerisierbaren Monomeren können 5 bis 95, vorzugsweise 20 bis 70, Gew.-%, bezogen auf Polycyanat, betragen.

Ein härtbares Harz gemäß der Erfindung läßt sich durch bloßes Erwärmen in ein gehärtetes Harz hervorragender Wärmebeständigkeit überführen. In der Regel werden jedoch zur Begünstigung einer Vernetzung der einzelnen Komponenten der Harzmasse Katalysatoren mitverwendet. Bevorzugte Katalysatoren sind Imidazole, wie 2-Methylimidazol, 2-Undecylimidazol, 2-Heptadecylimidazol, 2-Phenylimidazol, 2-Ethyl-4-methylimidazol, 1-Benzyl-2-methylimidazol, 1-Propyl-2-methylimidazol, 1-Cyanoethyl-2-methylimidazol, 1-Cyanoethyl-2-ethyl-4-methylimidazol, 1-Cyanoethyl-2-undecylimidazol, 1-Cyanoethyl-2-phenylimidazol, 1-Guanaminoethyl-2-methylimidazol und Additionsprodukte von Imidazol und Trimellithsäure, tertiäre Amine, wie N,N-Dimethylbenzylamin, N,N-Dimethylanilin, N,N-Dimethyltoluidin, N,N-Dimethyl-p-anisidin, p-Halogen-N,N-dimethylanilin, 2-N-Ethylanilinoethanol, Tri-n-butylamin, Pyridin, Chinolin, N-Methylmorpholin, Triethanolamin, Triethylendiamin, N,N,N',N'-Tetramethylbutandiamin, N-Methylpiperidin, Phenole, wie Phenol, Kresol, Xylenol, Resorcin und Phloroglucin, organische metallsalze, wie Bleinaphthenat, Bleistearat, Zinknaphthenat, Zinkoctoat, Zinnoleat, Dibutylzinnmaleat, Mangannaphthenat, Cobaltnaphthenat und Eisenacetylacetonat, anorganische Metallsalze, wie Zinn(IV)-chlorid, Zinkchlorid und Aluminiumchlorid, Peroxide, wie Benzoylperoxid, Lauroylperoxid, Octanoylperoxid, Acetylperoxid, p-Chlorbenzoylperoxid und Di-tert.-butyldiperphthalat, Säureanhydride, wie Maleinsäureanhydrid, Phthalsäureanhydrid, Laurinsäureanhydrid, Pyromellithsäureanhydrid, Trimellithsäureanhydrid, Hexanhydronaphthalinsäureanhydrid, Hexahydropyromellithsäureanhydrid und Hexahydrotrimellithsäureanhydrid, Azoverbindungen, wie Azoisobutyronitril, 2,2'-Azobispropan oder m,m'-Azoxystyrol, und/oder Hydrazone bzw. Hydrozone.

Auch die für die Härtung von Epoxyharzen bekannten Katalysatoren eignen sich zum Härten der erfindungsgemäßen Harze.

Die erfindungsgemäßen Harze lassen sich mit allen bekannten Fasern, daraus hergestellten Geweben (ggf. auch Mischgeweben), Vliesen und Waben zu Verbundwerkstoffen verarbeiten. Besonders bevorzugte Fasern sind Glasfasern, Aramidfasern und Kohlenstoffasern.

Der Fasergehalt der Verbundwerkstoffe beträgt in der Regel 10 bis 80, vorzugsweise 30 bis 70, Gew.-%, bezogen auf die Summe von gehärtetem Harz und Fasern.

Weiterer Gegenstand der Erfindung ist also die Verwendung der neuen wärmehärtbaren Harze zur Herstellung von Verbundwerkstoffen.

Man kann aus den erfindungsgemäßen Harzen und Verstärkungsfasern natürlich durch Überführung aus dem ungehärteten « A-Zustand » in einen präpolymerisierten « B-Zustand » sogenannte « Prepregs » herstellen, die dann zu gegebener Zeit nach Formgebung endgültig auspolymerisiert werden.

Die Härtung der erfindungsgemäßen Harze kann in der Regel bei Temperaturen von 160 bis 250 °C, vorzugsweise 200 bis 230 °C, erfolgen.

Aufgrund der hohen erreichbaren Thermostabilität lassen sich die Verbundwerkstoffe überall dort einsetzen, wo auf diese Eigenschaft besonderer Wert gelegt wird, z. B. in der Automobiltechnik im Motorbereich, im Flugzeugbau im Bereich der Triebwerke und für temperaturbeständige Gehäuseteile von Maschinen aller Art.

Gegenstand der Erfindung ist auch die Verwendung der anspruchsgemäß definierten, wärmehärtbaren Harze bei der Herstellung von interpenetrating polymer networks (IPN's). IPN's, das heißt sich durchdringende polymere Netzwerke und ihre Herstellung auf Basis mindestens eines Thermoplasts bzw. dessen noch nicht filmbildender Vorstufe und/oder mindestens eines härtbaren Harzes bzw. dessen Vorstufe sind bekannt (vergl. US-PS 4 041 103, US-PS 4 101 605, US-PS 4 157 360, US-PS 4 334 045, DE-OS 2 153 987).

Die erfindungsgemäßen wärmehärtbaren Harze können im Gemisch mit mindestens einem Thermoplast bzw. dessen noch nicht filmbildender Vorstufe und gegebenenfalls wärmehärtbaren Harzen oder Komponenten, die von den erfindungsgemäßen wärmehärtbaren Harzen verschieden sind, zur Herstellung der IPN's herangezogen werden.

Die Thermoplaste können gegebenenfalls mit der Cyanestergruppe reaktionsfähige Gruppen, z. B. aliphatische oder phenolische Hydroxylgruppen, Thiolgruppen, primäre und/oder sekundäre Aminogruppen, Carboxylgruppen und andere, enthalten.

Als Thermoplaste seien beispielhaft genannt: Polyolefine wie Polypropylen, aliphatische und aromatische Polyamide, z. B. aus Adipinsäure/1,6-Hexamethylendiamin, Polycaprolactam, Terephthalsäure/Phenylendiamine u. a. ; Polycarbonate, z. B. auf Basis von Bisphenol A ; Polyester wie Polyethylenterephthalat, Polybutylenterephthalat, Polystyrol, Polyimide, Polyurethane oder deren Mischungen.

In den Gemischen zur Herstellung der IPN's sind die erfindungsgemäßen wärmehärtbaren Harze und gegebenenfalls andere, von den erfindungsgemäßen Harzen sich unterscheidende, wärmehärtbare Komponenten, wie z. B. Bis-maleinimide, in einer Menge von insgesamt 0.1 bis 40 Gew.-%, vorzugsweise 0.1 bis 9 Gew.-% und die Thermoplaste dementsprechend in einer Menge von 60 bis 99,9 Gew.-%, vorzugsweise 91 bis 99,9 Gew.-%, stets bezogen auf die Summe aus wärmehärtbaren Harzen und Thermoplasten, enthalten.

Da Härtung der erfindungsgemäßen Harze in Abmischung mit mindestens einem Thermoplast und gegebenenfalls anderen, von den erfindungsgemäßen Harzen sich unterscheidenden, wärmehärtbaren Komponenten kann bei 160 bis 250 °C, vorzugsweise 200 bis 230 °C, in Gegenwart der bereits für Härtung der erfindungsgemäßen Harze beschriebenen Katalysatoren erfolgen, vorzugsweise in Mengen von 0.01 bis 5 Gew.-%, bezogen auf Summe aus wärmehärtbaren Harzen und Thermoplasten. Zur Herstellung von Verbundstoffen kann die Härtung in Gegenwart von organischen und/oder anorganischen Fasern und daraus hergestellten Fäden, Vliesen, Geweben usw. durchgeführt werden, wobei der Fasergehalt der Verbundstoffe etwa 10 bis 80 Gew.-%, vorzugsweise 30 bis 70 Gew.-%, bezogen auf Verbundstoff, betragen kann.

Die erfindungsgemäßen wärmehärtbaren Harze und ihre Mischungen mit Thermoplasten und gegebenenfalls anderen wärmehärtbaren Komponenten können selbstverständlich auch in Gegenwart der bekannten Füllstoffe, wie Ruß, Aluminiumoxide, Siliziumcarbid, Kieselsäuren, Metallpulver usw., in üblichen Mengen nach Formgebung durch Gießen, Extrudieren, Spritzgießen usw. zu Formkörpern und Überzügen gehärtet werden.

Die Eigenschaften der in den nachfolgenden Beispielen gehärteten Teile wurden nach folgenden normierten Methoden bestimmt :

| | |
|---|---|
| Reißfestigkeit : | DIN 53 455 |
| Bruchdehnung : | DIN 53 455 |
| Elastizitätsmodul : | DIN 53 457 |
| Martenstemperatur : | DIN 53 458 |
| Vicat B-Temperatur : | DIN 57 302 |

## Beispiel 1

225 g 2,2-Bis-(4-cyanatophenyl)-propan und 25 g Dimerfettsäure-hexandiol-1,6-polyester mit einer OH-Zahl von 60 mg KOH/g Substanz und einem mittleren Molekulargewicht $\bar{M}_n$ von 1 870 wurden 3 Stunden bei 105 °C präpolymerisiert. Das Präpolymerisat (Gehalt an freien Cyanat-Gruppen : 20,0 Gew.-%) wurde in eine 200 °C heiße Stahlform gegossen und bei dieser Temperatur 4 Stunden gehärtet. Aus der erhaltenen Platte des Formats 320 × 160 × 4 mm wurden Normstäbe hergestellt, die folgende Eigenschaften aufwiesen :

| | |
|---|---|
| Reißfestigkeit | 91,51 ± 4,11 (N/mm²) |
| Bruchdehnung | 5,22 ± 0,73 (%) |
| E-Modul | 4 740 ± 155 (N/mm²) |
| Martenstemperatur | 205 (°C) |
| Schlagzähigkeit | 35,88 ± 3,11 (kJ/m²) |
| Kerbschlagzähigkeit | 1,38 ± 0,26 (kJ/m²) |

### Vergleich 1

Beispiel 1 wurde mit dem Unterschied wiederholt, daß ohne Dimerfettsäure-hexandiol-1,6-polyester gearbeitet wurde. Die Brechdehnung des gehärteten Polycyanats betrug 1,5 ± 0,28 (%).

### Vergleich 2

Beispiel 1 wurde mit dem Unterschied wiederholt, daß der Dimerfettsäure-hexandiol-1,6-polyester durch 25 g 1,6-Hexandiolpolycarbonat mit einem mittleren Molekulargewicht von 2 000 und einer OH-Zahl von 56 mg KOH/g Substanz ersetzt wurde. Die Bruchdehnung betrug 2,44 ± 0,41 (%).

Vergleich 2 zeigt, daß trotz vergleichbarer Molgewichte des Dimerfettsäure-hexandiol-polyesters gemäß Beispiel 1 und des Hexandiolpolycarbonats nach Vergleich 2 das letztere eine wesentlich geringe Verbesserung der Bruchdehnung bewirkt.

## Beispiel 2

200 g 2,2-Bis-(4-cyanatophenyl)-propan und 50 g Dimerfettsäurehexandiol-1,6-polyester mit einer OH-Zahl von 112 und einem mittleren Molekulargewicht $\bar{M}_n$ von 1 000 wurden 1 Stunde bei 105 °C präpolymerisiert. Das Präpolymere hatte einen Gehalt von ca. 19,5 Gew.-% an freien Cyanat-Gruppen. Es wurde in eine 200 °C heiße Stahlform gegossen und bei diese Temperatur 3 Stunden gehärtet. Aus der Platte hergestellte Normstäbe besaßen folgende Eigenschaften :

| | |
|---|---|
| Reißfestigkeit | 76,31 ± 3,19 (N/mm²) |
| Bruchdehnung | 6,1 ± 1,27 (%) |
| E-Modul | 2 270 ± 396 (N/mm²) |
| Martenstemperatur | 145 (°C) |
| Schlagzähigkeit | 28,59 ± 9,27 (kJ/m²) |
| Kerbschlagzähigkeit | 1,90 ± 0,06 (kJ/m²) |

## Beispiel 3

Beispiel 1 wurde mit dem Unterschied wiederholt, daß man als Polycyanat 225 g 1,3-Dicyanatobenzol einsetzte. Das Präpolymere hatte einen Gehalt an freien Cyanat-Gruppen von ca. 20,0 Gew.-%. Die Normstäbe hatten die folgenden Eigenschaften :

| | |
|---|---|
| Reißfestigkeit | 104,32 ± 5,23 (N/mm²) |
| Bruchdehnung | 8,14 ± 1,37 (%) |
| E-Modul | 3 840 ± 132 (N/mm²) |
| Martenstemperatur | 194 (°C) |

Beispiel 4

Beispiel 1 wurde mit dem Unterschied wiederholt, daß man als Polycyanat 225 g 2,2-Bis-(4-cyanatophenyl)-hexafluorpropan einsetzte. Der Gehalt an freien Cyanat-Gruppen im Präpolymeren beträgt ca. 20,0 Gew.-%. Die Normstäbe hatten die folgenden Eigenschaften :

| | |
|---|---|
| Reißfestigkeit | 108,52 ± 5,32 ($N/mm^2$) |
| Bruchdehnung | 5,41 ± 0,80 (%) |
| E-Modul | 5 230 ± 208 ($N/mm^2$) |
| Martenstemperatur | 216 (°C) |
| Wasseraufnahme (6 Tage/25 °C) | 0,05 (%) |
| Reißfestigkeit nach Lagerung in Luft (200 °C/1 000 Std.) | 105,32 ± 4,01 ($N/mm^2$) |

Ähnliche Werte erhält man bei Verwendung von 1,2-Bis-(4-cyanatophenyl)-tetrafluorethan.

Beispiel 5

178,92 g 2,2-Bis-(4-cyanatophenyl)-propan und 25 g des Dimerfettsäure-hexandiol-1,6-polyesters aus Beispiel 1 wurden 40 Minuten bei 125 °C verrührt. In die auf 135 °C aufgeheizte Mischung wurden portionsweise 46,08 g eines aus 4,4'-Diaminodiphenylmethan und Maleinsäureanhydrid hergestellten Bismaleinimids eingetragen. Die Reaktionsmischung wurde bei dieser Temperatur 1 Stunde nachgerührt, im Wasserstrahlvakuum entgast und in eine 200 °C heiße Stahlform gegossen. Die hergestellten Normstäbe besaßen folgende Eigenschaften :

| | |
|---|---|
| Reißfestigkeit | 58,95 ± 8,11 ($N/mm^2$) |
| Bruchdehnung | 3,14 ± 0,63 (%) |
| E-Modul | 2 932 ± 276 ($N/mm^2$) |

Vergleich 3

Beispiel 5 wurde mit dem Unterschied wiederholt, daß man ohne Dimerfettsäure-hexandiol-1,6-polyester arbeitete. Die Bruchdehnung der erhaltenen Normstäbe betrug 1.26 ± 0,31 (%).

Beispiel 6

20 Gew.-Teile des Cyanat-Präpolymeren gemäß Beispiel 1 werden mit 50 Gew.-Teilen eines Gemisches aus 5 Gew.-Teilen 2,2-Bis-(4-cyanatophenyl)-propan und 45 Gew.-Teilen eines Polycarbonats auf Basis von Bisphenol A mit phenolischen Endgruppen und einem mittleren Molgewicht $\bar{M}_n$ von 2 200 sowie 50 Gew.-Teilen eines isotaktischen Polypropylens mit einem Schmelzindex (MFI) von 9 g/10 min bei 230 °C und 5 kg Belastung bei 200 °C extrudiert und bei dieser Temperatur ausgehärtet. Man erhält ein nagel- und sägbares Polymer mit einer Vicat B-Temperatur von 280 °C.

Wiederholt man vorstehenden Versuch ohne Einsatz der 20 Gew.-Teile des Cyanat-Präpolymeren, so erhält man ein sprödes inhomogenes Polymer mit einer Vicat B-Temperatur von 134 °C.

Beispiel 7

50 Gew.-Teile isotaktisches Polypropylen gemäß Beispiel 6 und 50 Gew.-Teile Polycarbonat mit einem mittleren Molgewicht $\bar{M}_n$ von 28 000 werden bei 240 °C verrührt. Man erhält eine inhomogene, fadenziehende Masse. Dazu werden 20 Gew.-Teile des Cyanat-präpolymeren aus Beispiel 1 zugemischt und extrudiert (Massetemp. 250 °C). Man erhält nach Ausheizen (3 h 200 °C) des Stranges einen holzartigen, homogenen Kombinationswerkstoff. Er ist nagel- und sägbar und weist eine Vicat B-Temperatur von 280 °C auf.

Wiederholt man den vorstehenden Versuch ohne Zugabe des Cyanat-Präpolymeren, so erhält man eine inhomogene Polymermischung, die bei der Nagelprobe zerplatzt. Die Vicat B-Temperatur beträgt 124 °C.

Beispiel 8

25 Gew.-Teile Styrol und 25 Gew.-Teile Polystyrol vom mittleren Molgewicht $\bar{M}_n = 2\,000$ mit OH-Endgruppen werden mit 50 Gew.-Teilen des Cyanat-Präpolymeren aus Beispiel 1 bei 100 °C 25 Stunden gerührt und dann langsam innerhalb von zwei Stunden auf 200 °C im Ofen aufgeheizt. Man erhält aus den flüssigen Vorstufen ein hartes IPN mit einer Martenszahl > 250 °C.

Beispiel 9

50 Gew.-Teile Polystyrol mit einem mittleren Molgewicht $\bar{M}_n$ = 28 000 werden mit 15 Gew.-Teilen des Cyanat-Präpolymeren aus Beispiel 1 bei 100 °C 2,5 Stunden gerührt und darauf in eine Stahlform gegossen. Es wird 4 Stunden bei 200 °C nachgeheizt. Man erhält aus der gießbaren Vorstufe ein starres Kombinationspolymer.

Martenszahl : 265 °C.

Beispiel 10

100 Gew.-Teile Polycaprolactam mit einem mittleren Molgewicht $\bar{M}_n$ = 20 000 werden mit 18 Teilen des Cyanat-Präpolymeren aus Beispiel 1 bei 230 °C verrührt und 2 Stunden bei 250 °C gehärtet. Nach dem Abkühlen erhält man einen Kombinationswerkstoff, der auch bei 300 °C formbeständig ist.

**Patentansprüche**

1. Wärmehärtbares Harz enthaltend
a) mindestens ein Polycyanat und
b) 1 bis 40 Gew.-%, bezogen auf (a), mindestens eines Polyesters mit einer OH-Zahl von 28 bis 320 mg KOH/g Substanz, einem als Zahlenmittel $\bar{M}_n$ bestimmten Molekulargewicht von 700 bis 8 000 und/oder
c) ein Vorpolymerisat aus (a) und (b),
dadurch gekennzeichnet, daß der Polyester (b) 50 bis 92 Gew.-% cycloaliphatische Strukturen enthaltender Alkohol- und/oder Säurereste enthält.

2. Harz nach Anspruch 1, dadurch gekennzeichnet, daß es 5 bis 20 Gew.-%, bezogen auf (a), der Komponente (b) enthält.

3. Harz nach Ansprüchen 1 und 2, dadurch gekennzeichnet, daß Komponente (b) eine OH-Zahl von 28 bis 140 mg KOH/g Substanz und ein Molekulargewicht $\bar{M}_n$ von 800 bis 4 000 besitzt.

4. Harz nach Ansprüchen 1-3, dadurch gekennzeichnet, daß der Polyester (b) 75 bis 99 Gew.-% cycloaliphatische Strukturen enthaltender Alkohol- und/oder Säurereste enthält.

5. Harz nach Ansprüchen 1-4, dadurch gekennzeichnet, daß die cycloaliphatische Strukturen enthaltende Reste Dimerfettsäurereste sind.

6. Harz nach Ansprüchen 1-4, dadurch gekennzeichnet, daß die cycloaliphatische Strukturen enthaltende Reste Dimerfettalkoholreste sind.

7. Harz nach Ansprüchen 1-6, dadurch gekennzeichnet, daß es zusätzlich 5 bis 95 Gew.-%, bezogen auf Polycyanat, eines olefinisch ungesättigten, polymerisierbaren Monomeren enthält, dessen Homopolymerisate hochtemperaturbeständig sind.

8. Harz nach Anspruch 7, dadurch gekennzeichnet, daß es 20 bis 70 Gew.-%, bezogen auf Polycyanat, des olefinisch ungesättigten, polymerisierbaren Monomeren enthält.

9. Verwendung der Harze nach Ansprüchen 1 bis 8 zur Herstellung von Verbundwerkstoffen.

10. Verwendung der Harze nach Ansprüchen 1 bis 8 bei der Herstellung von interpenetrating polymer networks (IPN's).

**Claims**

1. Thermosetting resin containing
a) at least one polycyanate and
b) 1 to 40 % by weight, based on (a), of at least one polyester having an OH number of 28 to 320 mg KOH/g of substance and a molecular weight, determined as a number average $\bar{M}_n$, of 700 to 8 000 and/or
c) a prepolymer of (a) and (b),
characterised in that the polyester (b) contains 50 to 92 % by weight of alcohol and/or acid residues containing cycloaliphatic structures.

2. Resin according to Claim 1, characterised in that it contains 5 to 20 % by weight, based on (a), of component (b).

3. Resin according to Claims 1 and 2, characterised in that component (b) has an OH number of 28 to 140 mg KOH/g·of substance and a molecular weight $\bar{M}_n$ of 800 to 4 000.

4. Resin according to Claims 1-3, characterised in that the polyester (b) contains 75 to 99 % by weight of alcohol and/or acid residues containing cycloaliphatic structures.

5. Resin according to Claims 1-4, characterised in that the residues containing cycloaliphatic structures are dimeric fatty acid residues.

6. Resin according to Claims 1-4, characterised in that the residues containing cycloaliphatic structures are dimeric fatty alcohol residues.

7. Resin according to Claims 1-6, characterised in that it additionally contains 5 to 95 % by weight, based on polycyanate, of an olefinically unsaturated, polymerisable monomer, the homopolymers of which are high-temperature-resistant.

8. Resin according to Claim 7, characterised in that it contains 20 to 70 % by weight, based on polycyanate, of the olefinically unsaturated, polymerisable monomer.

9. Use of the resins according to Claims 1 to 8 for the production of composite materials.

10. Use of the resins according to Claims 1 to 8 in the production of interpenetrating polymer networks (IPN's).

**Revendications**

1. Résine thermodurcissable contenant

a) au moins un polycyanate et

b) 1 à 40 % en poids, par rapport à (a), d'au moins un polyester d'indice d'hydroxyle allant de 28 à 320 mg de KOH par g de substance, de poids moléculaire déterminé d'après la moyenne en nombre $\bar{M}_n$ de 700 à 8 000 et/ou

c) un produit de prépolymérisation de (a) et (b),

caractérisée en ce que le polyester (b) contient 50 à 92 % en poids de restes alcool et/ou acide contenant des structures cycloaliphatiques.

2. Résine suivant la revendication 1, caractérisée en ce qu'elle contient 5 à 20 % en poids, par rapport à (a), du composant (b).

3. Résine suivant les revendications 1 et 2, caractérisée en ce que le composant (b) possède un indice d'hydroxyle de 28 à 140 mg de KOH/g de substance et a un poids moléculaire $\bar{M}_n$ de 800 à 4 000.

4. Résine suivant les revendications 1 à 3, caractérisée en ce que le polyester (b) contient 75 à 99 % en poids de restes alcool et/ou acide contenant des structures cycloaliphatiques.

5. Résine suivant les revendications 1 à 4, caractérisée en ce que les restes contenant des structures cycloaliphatiques sont des restes d'acide gras dimère.

6. Résine suivant les revendications 1 à 4, caractérisée en ce que les restes contenant des structures cycloaliphatiques sont des restes d'alcool gras dimère.

7. Résine suivant les revendications 1 à 6, caractérisée en ce qu'elle contient en outre 5 à 95 % en poids, par rapport au polycyanate, d'un monomère polymérisable à non-saturation oléfinique dont les produits d'homopolymérisation sont stables aux hautes températures.

8. Résine suivant la revendication 7, caractérisée en ce qu'elle contient 20 à 70 % en poids, par rapport au polycyanate, du monomère polymérisable à non-saturation oléfinique.

9. Utilisation des résines suivant les revendications 1 à 8 pour la production de matériaux composites.

10. Utilisation des résines suivant les revendications 1 à 8 pour la production d'interpenetrating polymer networks (IPN).